(19) Europäisches Patentamt
European Patent Office
Office européen des brevets

(11) Publication number: 0 139 016
A1

(12) # EUROPEAN PATENT APPLICATION

published in accordance with Art. 158(3) EPC

(21) Application number: 84901216.6

(51) Int. Cl.[4]: B 23 P 1/14

(22) Date of filing: 14.03.84

Data of the international application taken as a basis:

(86) International application number:
PCT/JP84/00103

(87) International publication number:
WO84/03652 (27.09.84 84/23)

(30) Priority: 14.03.83 JP 40587/83

(43) Date of publication of application:
02.05.85 Bulletin 85/18

(84) Designated Contracting States:
CH DE FR GB LI

(71) Applicant: FANUC LTD
5-1, Asahigaoka 3-chome Hino-shi
Tokyo 191(JP)

(72) Inventor: MATSUI, Mitsuo
1-12-17, Higashinakano Nakano-ku
Tokyo 164(JP)

(72) Inventor: YUKUTOMO, Masashi
1-10-5, Nishihashimoto Sagamihara-shi
Kanagawa 229(JP)

(74) Representative: Massey, Alexander et al,
MARKS & CLERK Scottish Life House Bridge Street
Manchester, M3 3DP(GB)

(54) **NUMERICAL CONTROL METHOD AND APPARATUS FOR ELECTRIC-DISCHARGE MACHINING.**

(57) When retracting an electric-discharge machining electrode because the distance between the electrode and a workpiece has become smaller than a predetermined value, the electrode is retracted at a speed with a high magnification ($f \times M_2$) for a predetermined period of time set by a timer (302) from the time at which a retraction signal is generated, and is then retracted at a speed with a low magnification ($f \times M_1$). When switching over from retraction to advance, advance speeds are similarly changed over from one to another by means of a timer (305). By thus applying a drive signal of a high magnification for a short period of time from the point at which the direction in which the electrode is moving changes, the response of the electrode movement control is improved, so that is is possible to prevent collisions between the electrode and the workpiece. It is also possible to eliminate unnecessary wasteful movements of the electrode.

EP 0 139 016 A1

./...

Fig. 3

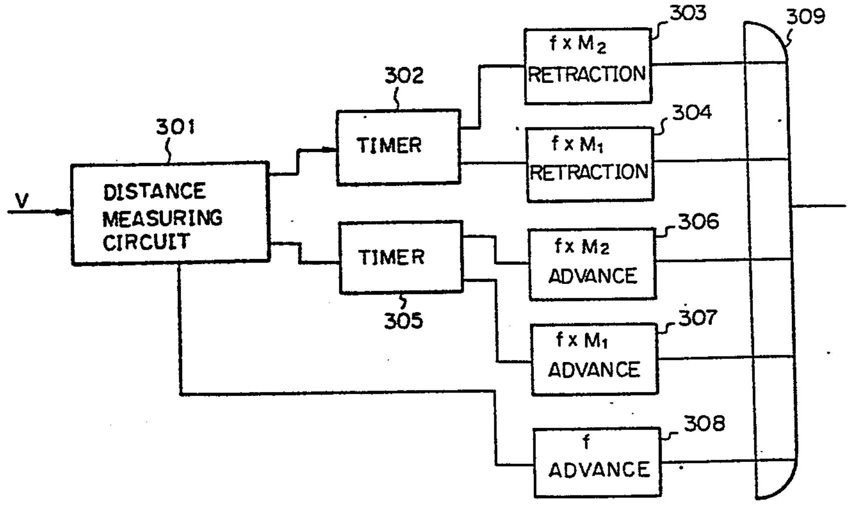

V
301
DISTANCE MEASURING CIRCUIT
302
TIMER
305
TIMER
303
f x M2 RETRACTION
304
f x M1 RETRACTION
306
f x M2 ADVANCE
307
f x M1 ADVANCE
308
f ADVANCE
309

0139016

TITLE MODIFIED
see front page

SPECIFICATION

# NUMERICAL CONTROL APPARATUS FOR ELECTRIC DISCHARGE MACHINING AND NUMERICAL CONTROL METHOD FOR ELECTRIC DISCHARGE MACHINING

## Technical Field

The present invention relates to a numerical control apparatus for electric discharge machining and a numerical control method for electric discharge machining, more particularly, in a numerical control apparatus for electric discharge machining including DC servo motors for determining the position of the machining electrode and a numerical control method for electric discharge machining, to an invention in which the response of control for retraction of the machining electrode is improved and wasted movement of the machining electrode is reduced.

## Background Art

Generally, in numerical control system for electric discharge machining, the position of the machining electrode visa-vis the article being machined (below, "work") is controlled in the X-axial, Y-axial, Z-axial, and rotational directions using respective DC servo motors so as to enable machining of the work to any desired shape. In such a case, when the distance between the machining electrode and the work falls below a predetermined value, arc discharge occurs and the work as a whole is melted, which is not preferable. Consequently, the machining electrode must be controlled so as to be retracted from the work when the above distance falls below the predetermined value.

However, in a servo closed circuit including DC motors, control is effected to reduce the followup error between the command rotational angle and the actual rotational angle of the motor. This followup error obstructs the improvement of the response of control for electrode retraction. Specifically, when the above-mentioned distance has fallen below the predetermined value, if one just places the electrode retraction signal in the ON state, the existence of said followup error can result in the electrode being fed forward, despite the fact the electrode retraction signal is ON, to become too close to the work and, in the worst case, to collide with the work. Therefore, in the prior art, a means has been employed for retracting the electrode at a feed speed several times the forward feed speed when the said distance reaches a predetermined value or less and while the electrode retraction signal is ON so as to improve the response of control for electrode retraction. However, there is the problem that just increasing the retraction feed speed to a fixed multiple of the forward feed speed will improve the said response, but will also retract the electrode more than necessary, i.e., result in more wasted movement. Lowering the rate of multiplication would eliminate the wasted movement, but would have the problem of deterioration of said response.

Disclosure of the Invention

The object of the present invention, in view of the above-mentioned problems in the prior art, is to enable control to retract or advance the electrode in a short time and at a high-multiple speed only when the direction of progression of the electrode is being changed, i.e., from advance to retraction and from retraction to advance, and to change to a low-multiple speed an appropriate time later and, based on this concept, in a numerical control system for electric discharge machining, to increase the speed of the electrode during advance and retraction and to reduce wasted movement during electrode retraction.

The gist of the present invention to achieve the above-mentioned object lies in a numerical control apparatus for electric discharge machining including a servo circuit for controlling the rotational speed of DC servo motors for positioning of a machining electrode, said numerical control apparatus for electric discharge machining characterized by being provided with a distance measuring means for measuring the distance between the machining electrode and the machined article; a high-multiple-speed retraction signal generating means for providing the servo circuit with a retraction signal of a high-multiple speed just for a first predetermined time when the distance detected by the distance measuring means falls to a first predetermined value or less; a low-multiple-speed retraction signal generating means for providing said servo circuit with a retraction signal of a low-multiple speed after the elapse of said first predetermined time; a high-multiple-speed advance signal generating means for providing the servo circuit with an advance signal of a high-multiple speed just for a second predetermined time when the distance detected by the distance measuring means rises to a second predetermined value or more greater than said first predetermined value; and a low-multiple-speed advance signal generating means for providing to said servo circuit an advance signal of a low-multiple speed after the elapse of the second predetermined time, and

a numerical control method for electric discharge machining for controlling the rotational speed of DC servo motors for positioning a machining electrode, said numerical control method for electric discharge machining characterized by comprising a step for measuring the distance between the machining electrode and the machined article; a step for providing a servo circuit for control of the DC motors with a retraction signal of a high-multiple speed just for a first predetermined time when the distance detected falls to a first predetermined value or less; a step for providing said servo circuit with a retraction signal of a low-multiple speed after the elapse of said first predetermined time; a step for providing the servo circuit with an advance signal of a high-multiple speed just for a second predetermined time when the distance detected rises to a second predetermined value or more greater than said first predetermined value; and a step for providing to said servo circuit an advance signal of a low-multiple speed after the elapse of the second predetermined time.

According to the present invention, the operation of electrode retraction for prevention of collision of the electric discharge machining electrode with the work is performed at a high speed with reduced wasted movement.

Brief Explanation of the Drawings

The object and characteristics of the above-mentioned present invention will become clearer from the following description of embodiments, made in reference to the attached drawings, in which:

Fig. 1 is a block diagram illustrating an outline of the numerical control apparatus for electric discharge machining according to the present invention;

Fig. 2 is a detailed block diagram of part of the block diagram of Fig. 1;

Fig. 3 is a block diagram illustrating an electrode advance and retraction control circuit according to an embodiment of the present invention; and

Fig. 4 is a flow chart of the case of control for advance and retraction of an electrode by software according to another embodiment of the present invention.

Best Mode for Carrying Out the Invention

Below, an explanation will be given of an embodiment of the present invention in reference to the drawings.

Figure 1 is a block diagram illustrating an outline of the numerical control apparatus for electric discharge machining according to the present invention. In the figure, reference numeral 1 is a machining bed; 10 an electric discharge machining power source; and 20 a numerical control apparatus. The machining bed 1 is provided with a machining electrode 2 and an opposing work table 3. The work table 3 carries a work 4. The work 4 and a front portion 5 of the machining electrode 2 are immersed in kerosine or other oil. The machining electrode is controlled by an X-direction feed motor 6, Y-direction feed motor 7, Z-direction feed motor 8, and Z-axial rotational angle control motor 9. The electric discharge machining power source 10 provides a drive signal D, for driving a pump (not shown) for filling or removing oil, to the pump, provided with the machining bed 1, and monitors the voltage V between the machining electrode 2 and the work table 3 of the machining bed 1. It was found that this voltage V is roughly proportional to the distance between the front portion 5 and the work 4 in a range of approximately 0 to 100 μm between the front portion 5 of the electrode 2 and the work 4. The numerical control apparatus 20 is comprised of a central processing unit 21, memory 22 for storing the control program and control data, calculation apparatus 23, and servo circuit 24.

When the above-mentioned monitored voltage V is applied from the electric discharge machining power source 10 to the memory 22, the central processing unit 21 analyzes it and, as explained later, has the calculation apparatus 23 calculate the rotational speed of the retraction signal or advance signal. The calculation apparatus 23 further provides an on/off control signal for the machining power or a signal to change the machining conditions to the electric discharge machining power source 10. The retraction signal or advance signal resulting from the calculation by the calculation apparatus 23 is applied to the servo circuit 24. Four output signals of the servo circuit 24 are respectively provided to the X-direction feed motor 6, Y-direction feed motor 7, Z-direction feed motor 8, and rotational angle control motor 9.

Figure 2 is a block diagram illustrating in detail the calculation apparatus 23 and the servo circuit 24 in the block diagram of Fig. 1. In Fig. 2, the calculation apparatus 23 is provided with a calculation circuit 231 and distributor 232. Based on the results of calculation by the calculation circuit 231, the distributor 232 sends out a retraction signal or advance signal to the servo circuit 241 for the X-direction feed motor, servo circuit 242 for the Y-direction feed motor, servo circuit 243 for the Z-direction feed motor, and servo circuit 244 for the rotational angle feed motor at periodic intervals, e.g., from each 2 milliseconds to each 8 milliseconds. In the figure, only the servo circuit 241 for the X-direction feed motor is shown in detail, however, the other servo circuits are identical in construction. The servo circuit 241 is comprised of a subtractor 245 for obtaining the difference between a command signal from the distributor 232 and the signal corresponding to the actual rotational speed of the DC servo motor 6; a followup error holding register 246 for holding a signal corresponding to that difference; a DA convertor 247 for converting the output of the register to an analog signal; and an amplifier 248. The output signal of the amplifier 248 is used to drive the X-direction feed motor 6.

Due to existence of the followup error held in the followup error holding register 246, even if a retraction signal is applied from the distributor, the electrode can continue to advance, as explained earlier. Also, just increasing the feed speed during retraction gives rise to the waste of more than necessary retraction of the electrode.

Therefore, in the present invention, the calculation circuit 231 shown in Fig. 2 includes a circuit as shown in Fig. 3.

Figure 3 is an electrode advance and retraction control circuit included in the calculation circuit 231 according to an embodiment of the present invention. In the figure, a distance measuring means 301 uses the voltage, sent from the electric discharge machining power source 10 (Fig. 1), between the machining power source 2 and work 4 to calculate the distance between the same and sends out a timer drive signal to a timer 302 when the distance falls below a first predetermined value at which the retraction of the electrode is to be started. The timer 302 receives this drive signal, then, for just a certain short time, drives a high-multiple-speed retraction signal generating circuit 303. Next, after this short time, it drives a low-multiple-speed retraction signal generating circuit 304 until the advance signal is issued. When the above-mentioned distance falls back to a second predetermined value at which the advance of the electrode is to be started, the distance measuring circuit 301 stops the drive of the timer 302 and sends out a timer drive signal to a timer 305. The timer 305 receives the drive signal, then, for just a certain short time, drives a high-multiple-speed advance signal generating circuit 306. Next, after the short time, it drives a low-multiple-speed advance signal generating circuit 307 until a retraction signal is issued. The above-mentioned certain short time may be the same as the output cycle of the distributor 232 (Fig. 2) or several cycles of the same. Further, at startup, the timers 302 and 305 are not driven and an advance signal of the usual speed is generated from an advance signal generating circuit 308. The output signals of the advance signal or retraction signal generating circuits 303, 304, 306, 307, and 308 are passed through an OR gate 309 to the distributor 232 (Fig. 2). In this way, at the output of the distributor 232, one of the outputs of the said generating circuits 303, 304, 306, 307, and 308 is output at each cycle.

Figure 4 is a flow chart of the case of advance and retraction control of an electrode by software according to another embodiment of the present invention. In Fig. 4, after the start, at step 1, judgement is made whether the operational mode isforward machining. Directly after the start, the machining electrode 2 is engaged in forward machining traveling toward the work 4 (see Fig. 1). Therefore, at step 2, judgement is made whether a retraction signal is generated. Immediately after the start, traveling for forward machining is effected, consequently the retraction signal for retracting the machining electrode 2 from the work 4 is OFF. Therefore, at step 3, the machining electrode 2 is advanced toward the work 4 by a normal speed f. The first cycle of steps 1, 2, and 3 is repeated in the period while the operational mode is forward machining and the retraction signal is OFF.

In the above-mentioned first cycle, if, at step 2, the retraction signal becomes ON due to the distance between the machining electrode 2 and the work 4 becoming a first predetermined value or lower, judgement is made at step 4 whether a first predetermined short time has elapsed since the initial time of detection of the ON state of the retraction signal. If before the elapse of the above-mentioned first predetermined short time, a retraction operation is conducted at step 5 at a high-multiple speed expressed by f X $M_2$. The second cycle of steps 1, 2, 4, and 5 is repeated in the period while the operational mode is forward machining, the retraction signal is ON, and the above-mentioned first predetermined short period has not yet elapsed.

In the above-mentioned second cycle, if it is judged at step 4 that the above-mentioned first predetermined short period has elapsed, the operational mode is changed at step 6 from forward machining to retraction operation and, next, at step 7, the retraction operation is effected at a low-multiple speed expressed by f X $M_1$ (however, $M_1 < M_2$). In the next cycle of the operation at step 7, since the operational mode is the retraction operation, i.e., an operation not forward machining, the process proceeds through step 1 to step 8.

At step 8, judgement is made whether the machining electrode 2 is readvancing. Immediately after the above-mentioned second cycle, the machining electrode 2 is retracting, not readvancing, so, at step 9, judgement is made whether the retraction signal is ON. The third cycle of steps 1, 8, 9, and 7 is repeated until the retraction signal becomes OFF. Thus, the machining electrode 2 is retracted at the low-multiple speed expressed by f X $M_1$.

In the above-mentioned third cycle, if, at step 9, the distance between the machining electrode 2 and the work 4 becomes greater than the second predetermined value, which is larger than the first predetermined value, judgement is made at step 10 whether a second predetermined short time has elapsed since the initial detection of the OFF state of the retraction signal. If the above-mentioned second predetermined short time has not yet elapsed, at step 11, an advance operation is effected at a high-multiple speed expressed by f X $M_2$. The third cycle of steps 1, 8, 9, 10, and 11 is repeated in the period while the operational mode is not forward machining, the retraction signal is OFF, and the above-mentioned second predetermined short time has not yet elapsed.

In the above-mentioned third cycle, if, at step 10, it is judged that the above-mentioned second predetermined short time has elapsed, the operational mode is changed to readvance at step 12. Next, at step 13, the machining electrode is advanced at the low-multiple speed expressed by f X $M_1$. In the next cycle of the operation at step 13, the operation mode is not forward machining, but readvance, therefore, the process proceeds through steps 1 and 8 to reach step 14.

At step 14, judgement is made whether the retraction signal is ON. If the retraction signal is OFF, at step 15, judgement is made whether the machining electrode 2 has reached a predetermined retraction start point. If it has not yet reached that point, at step 16, an advance operation is effected at the low-multiple speed of f X $M_1$. After reaching the point, the mode is changed at step 17 to forward machining and an advance operation is effected at the normal speed, expressed by f.

If the retraction signal is ON at step 14, before the elapse of the first predetermined short time, a retraction operation is effected at the high-multiple speed expressed by f X $M_2$ at step 5 through step 4. After the elapse of the first predetermined short time, the retraction operation is effected at the low-multiple speed expressed by f X $M_1$ at step 7 through step 6.

In this way, a retraction operation or advance operation is effected at a high speed for a certain fixed short time only when changing from advance to retraction or vice versa. Therefore, the response of control for electrode retraction is much better than with the prior art. Further, more than necessary retraction of the electrode is eliminated.

It is possible to display the above-mentioned speed f and multiples $M_1$ and $M_2$ on a display apparatus provided with the numerical control apparatus so as to enable setting of the optimal values as parameters and to input the same by an operational panel.

Capability of Exploitation in Industry

As clear from the above explanation, according to the present invention, it is possible to dramatically improve the response in advance and retraction of an electrode in a numerical control electric discharge machining system over the prior art. Further, wasted movement during retraction of the electrode is reduced. Consequently, the invention can be utilized beneficially for electric discharge machining.

CLAIMS

1. A numerical control apparatus for electric discharge machining including a servo circuit for controlling the rotational speed of DC servo motors for positioning of a machining electrode, said numerical control apparatus for electric discharge machining characterized by being provided with:

a distance measuring means for measuring the distance between the machining electrode and the machined article;

a high-multiple-speed retraction signal generating means for providing said servo circuit with a retraction signal of a high-multiple speed just for a first predetermined time when the distance detected by the distance measuring means falls to a first predetermined value or less;

a low-multiple-speed retraction signal generating means for providing said servo circuit with a retraction signal of a low-multiple speed after the elapse of said first predetermined time;

a high-multiple-speed advance signal generating means for providing the servo circuit with an advance signal of a high-multiple speed just for a second predetermined time when the distance detected by the distance measuring means rises to a second predetermined value or more greater than said first predetermined value; and

a low-multiple-speed advance signal generating means for providing to said servo circuit an advance signal of a low-multiple speed after the elapse of the second predetermined time.

2. A numerical control apparatus for electric discharge machining according to claim 1, wherein said a distance measuring means measures a voltage between said machining electrode and said machined article.

3. A numerical control apparatus for electric discharge machining according to claim 1 or claim 2, wherein said servo circuit is provided with a followup error holding register for storing a difference between a signal corresponding to a rotational position of said DC servo motors and a command signal, said followup error holding register receiving a signal every predetermined time interval from one of said high-multiple-speed retraction signal generating means, low-multiple-speed retraction signal generating means, high-multiple-speed advance signal generating means, and low-multiple-speed advance signal generating means.

4. A numerical control method for electric discharge machining for controlling the rotational speed of DC servo motors for positioning a machining electrode, said numerical control method for electric discharge machining characterized by comprising:

a step for measuring the distance between the machining electrode and the machined article;

a step for providing a servo circuit for control of the DC motors with a retraction signal of a high-multiple speed just for a first predetermined time when the distance detected falls to a first predetermined value or less;

a step for providing said servo circuit with a retraction signal of a low-multiple speed after the elapse of said first predetermined time;

a step for providing the servo circuit with an advance signal of a high-multiple speed just for a second predetermined time when the distance detected rises to a second predetermined value or more greater than said first predetermined value; and

a step for providing to said servo circuit an advance signal of a low-multiple speed after the elapse of the second predetermined time.

Fig. 1

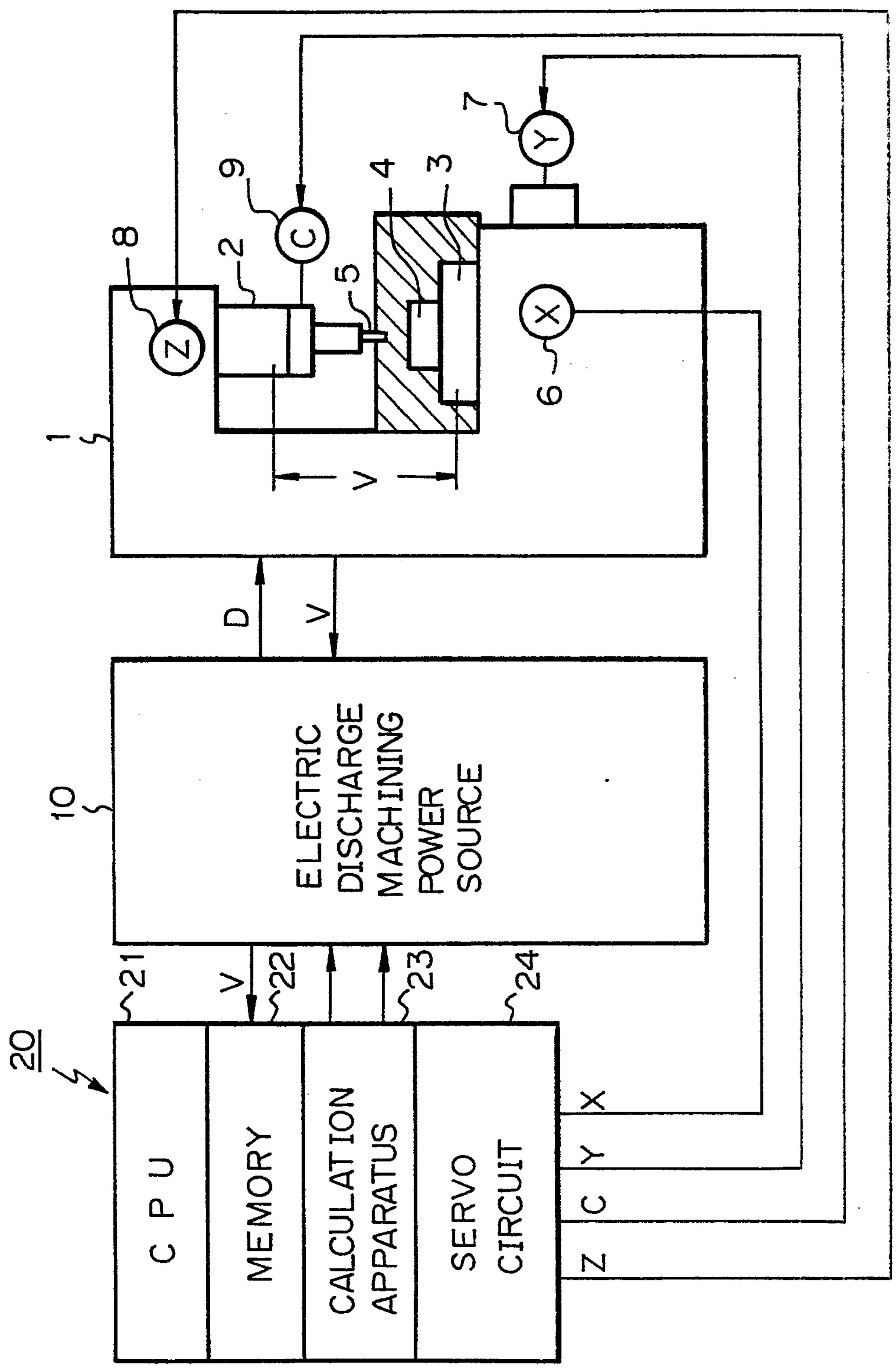
20
21
22
23
24
C P U
MEMORY
CALCULATION APPARATUS
SERVO CIRCUIT
X
Y
C
Z
V
10
ELECTRIC DISCHARGE MACHINING POWER SOURCE
D
V
1
2
3
4
5
6
7
8
9
V

Fig. 2

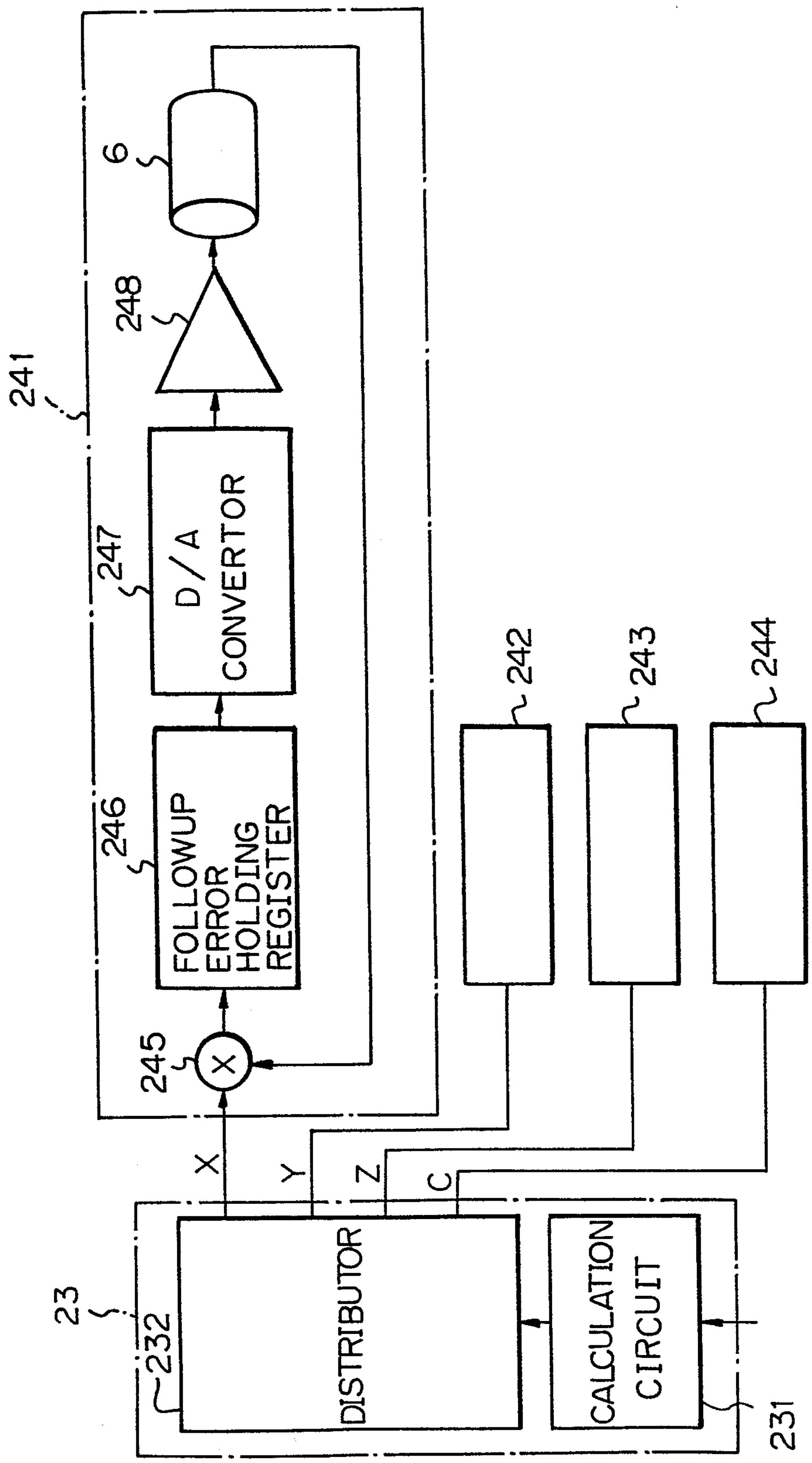

241
6
248
247
D/A
CONVERTOR
246
FOLLOWUP
ERROR
HOLDING
REGISTER
245
242
243
244
X
Y
Z
C
23
232
DISTRIBUTOR
CALCULATION
CIRCUIT
231

Fig. 3

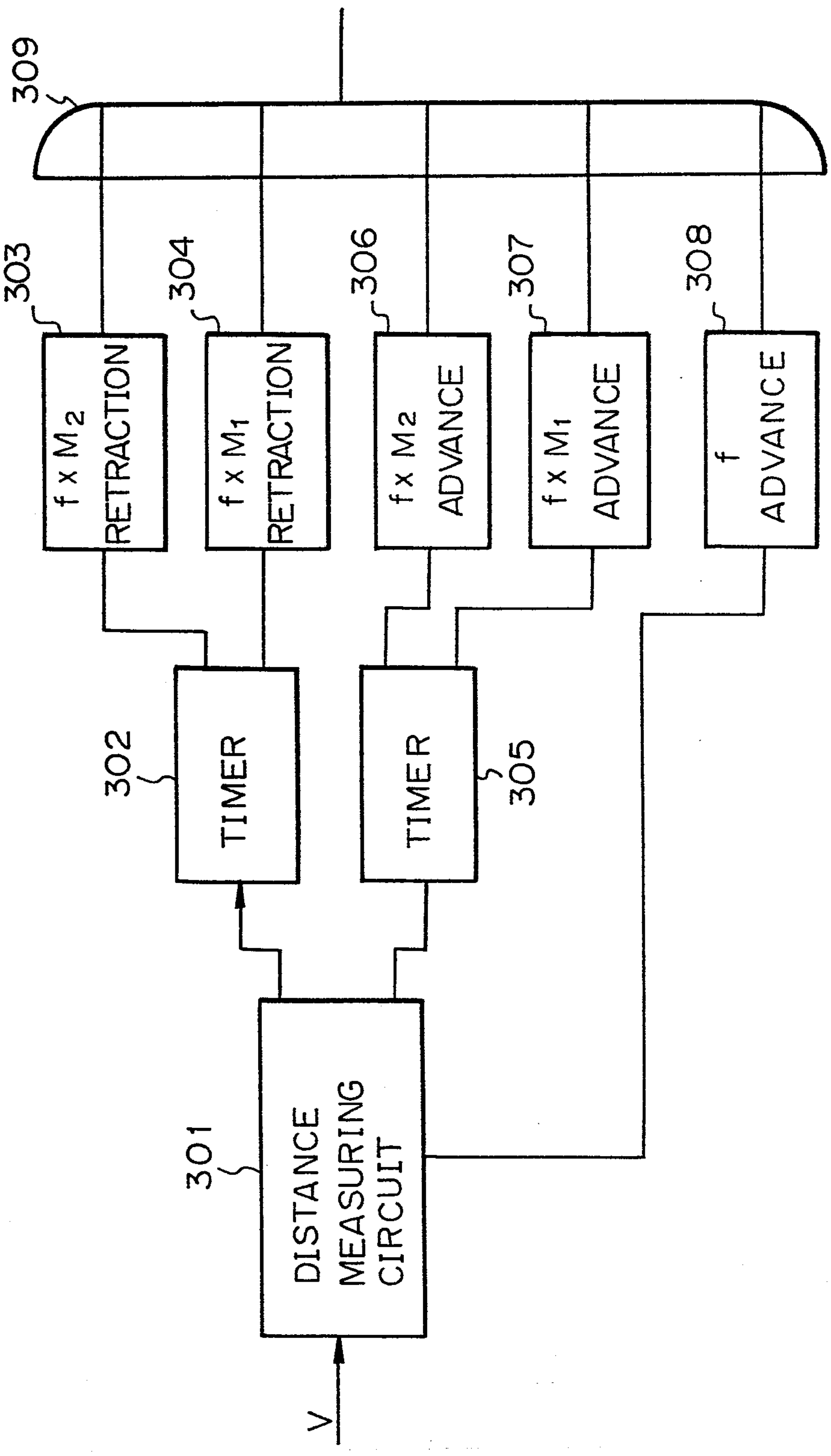
309
303
f x $M_2$ RETRACTION
304
f x $M_1$ RETRACTION
306
f x $M_2$ ADVANCE
307
f x $M_1$ ADVANCE
308
f ADVANCE
302
TIMER
305
TIMER
301
DISTANCE MEASURING CIRCUIT
V

Fig. 4

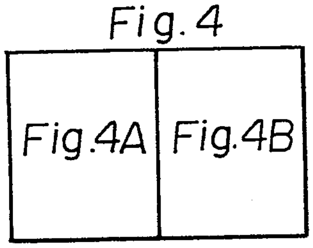
Fig.4A
Fig.4B

Fig. 4A

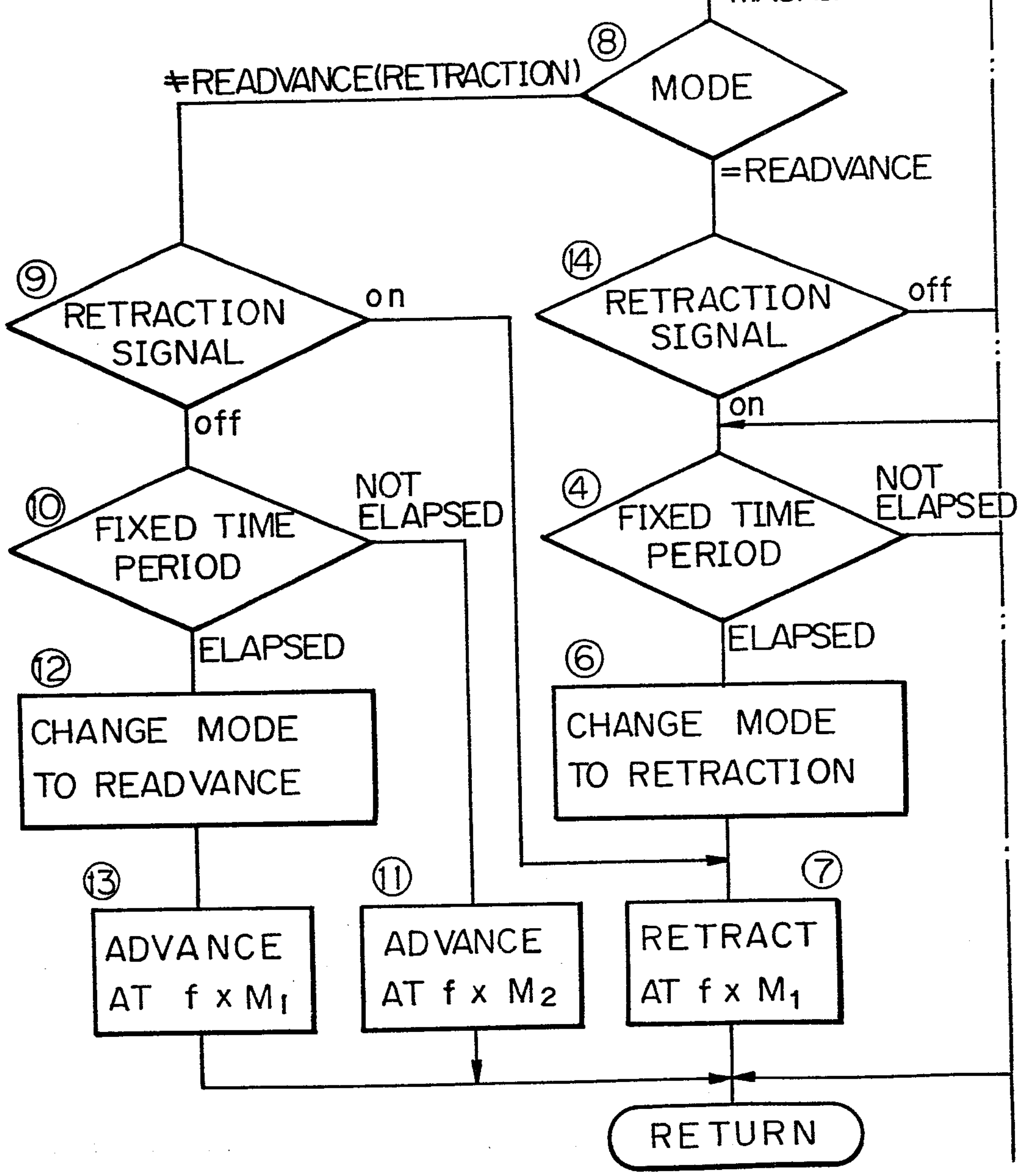
START
R
① MODE
= FORWARD MACHINING
≠ FORWARD MACHINING
⑧ MODE
≠ READVANCE (RETRACTION)
= READVANCE
⑨ RETRACTION SIGNAL
on
off
⑭ RETRACTION SIGNAL
off
on
⑩ FIXED TIME PERIOD
NOT ELAPSED
ELAPSED
④ FIXED TIME PERIOD
NOT ELAPSED
ELAPSED
⑫ CHANGE MODE TO READVANCE
⑥ CHANGE MODE TO RETRACTION
⑬ ADVANCE AT f x M1
⑪ ADVANCE AT f x M2
⑦ RETRACT AT f x M1
RETURN

*Fig. 4B*

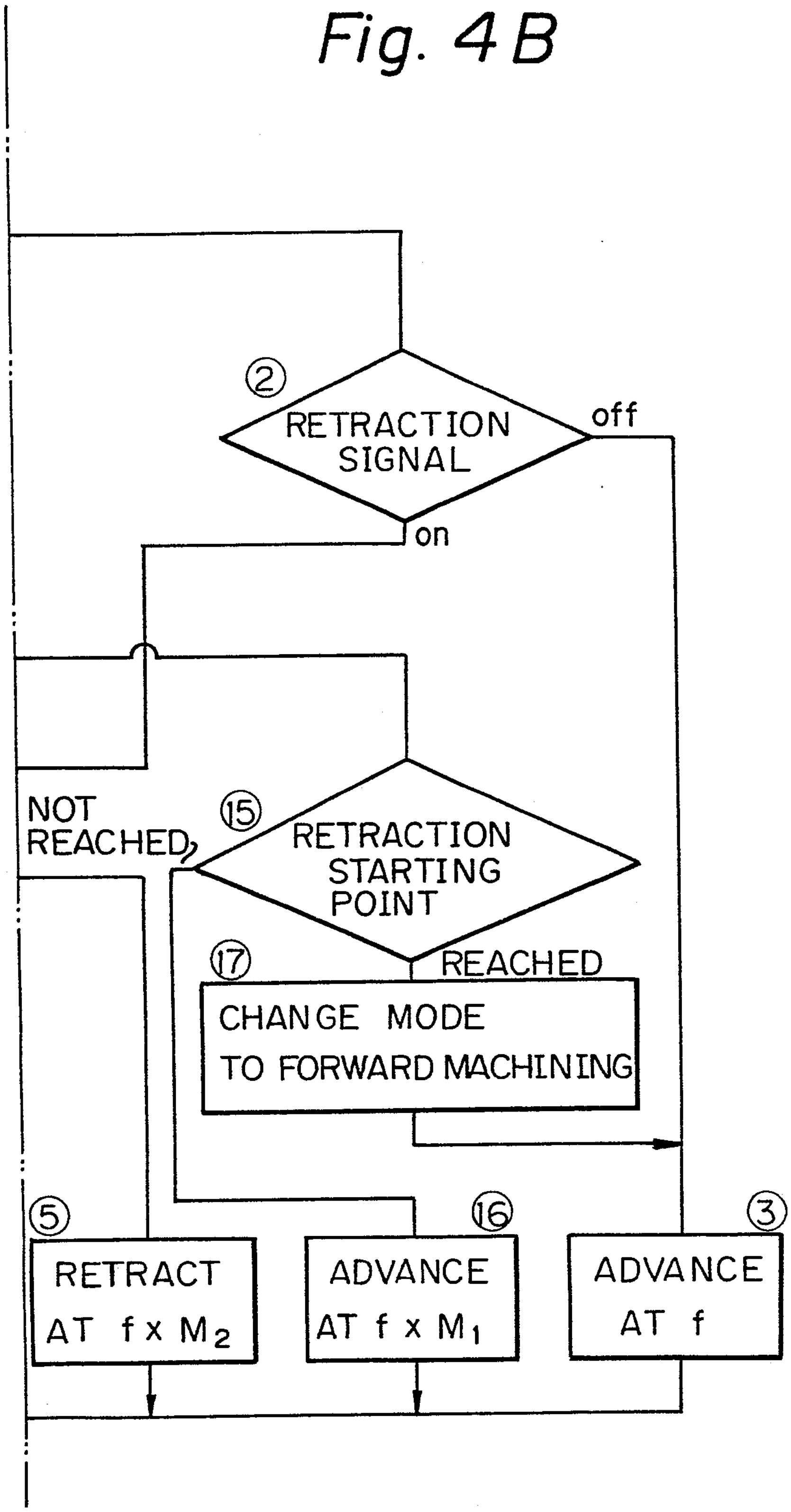
②
RETRACTION SIGNAL
off
on
NOT REACHED
⑮
RETRACTION STARTING POINT
REACHED
⑰
CHANGE MODE TO FORWARD MACHINING
⑤
RETRACT AT f x M2
⑯
ADVANCE AT f x M1
③
ADVANCE AT f

TABLE OF REFERENCE CHARACTERS

| | |
|---|---|
| 1: | Machining bed |
| 2: | Machining electrode |
| 3: | Work table |
| 4: | Work |
| 6: | X-direction feed motor |
| 7: | Y-direction feed motor |
| 8: | Z-direction feed motor |
| 9: | Rotational angle control motor |
| 10: | Electric discharge machining power source |
| 20: | Numerical control apparatus |
| 21: | Central processing unit |
| 22: | Memory |
| 23: | Calculation apparatus |
| 24: | Servo circuit |
| 301: | Distance measuring circuit |
| 302, 305: | Timers |
| 303: | High-multiple-speed retraction signal generating circuit |
| 304: | Low-multiple-speed retraction signal generating circuit |
| 306: | High-multiple-speed advance signal generating circuit |
| 307: | Low-multiple-speed advance signal generating circuit |

0139016

# INTERNATIONAL SEARCH REPORT

International Application No. PCT/JP84/00103

**I. CLASSIFICATION OF SUBJECT MATTER** (if several classification symbols apply, indicate all) [3]

According to International Patent Classification (IPC) or to both National Classification and IPC

Int. $Cl^3$ B23P 1/14

**II. FIELDS SEARCHED**

Minimum Documentation Searched [4]

| Classification System | Classification Symbols |
|---|---|
| IPC | B23P 1/00 - 1/20 |

Documentation Searched other than Minimum Documentation to the Extent that such Documents are Included in the Fields Searched [5]

| Documentation | Years |
|---|---|
| Jitsuyo Shinan Koho | 1926 - 1984 |
| Kokai Jitsuyo Shinan Koho | 1971 - 1984 |

**III. DOCUMENTS CONSIDERED TO BE RELEVANT** [14]

| Category* | Citation of Document, [16] with indication, where appropriate, of the relevant passages [17] | Relevant to Claim No. [18] |
|---|---|---|
| A | JP, A, 49-67279 (Tohei Shokai Kabushiki Kaisha), 29 June 1974 (29. 06. 74) | 1, 2, 3, 4 |

* Special categories of cited documents: [15]

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

**IV. CERTIFICATION**

| Date of the Actual Completion of the International Search [2] | Date of Mailing of this International Search Report [2] |
|---|---|
| May 29, 1984 (29. 05. 84) | June 4, 1984 (04. 06. 84) |
| **International Searching Authority** [1] | **Signature of Authorized Officer** [20] |
| Japanese Patent Office | |